# EUROPEAN PATENT APPLICATION

(11) **EP 2 059 086 A1**
(43) Date of publication of application: **13.05.2009**
(21) Application number: 07301540.6
(22) Date of filing: 09.11.2007
(51) Int. Cl.: H04W 88/08

(54) **Communication device at regional segment of a mobile communication infrastructure LTE**

(71) Applicant: Alcatel Lucent, 75008 Paris (FR)
(72) Inventor: Taton, Loïc, 92700, COLOMBES (FR); Ratovelomanana, Frédéric, 75018, PARIS (FR)
(74) Representative: Hervouet, Sylvie

(57) **Abstract**

Communication device, at regional segment of a mobile communication infrastructure, linking at least one access gateway, AGW, (1) to a core of said mobile communication infrastructure and a plurality of at least one remote radio head, RRH, (6), comprising one linking and controlling station, eNodeB, (3), associated to each remote radio head (6), said linking and controlling station (3):
being linked with said associated remote radio head (6)
controlling said remote radio head (6),
being linked with the access gateways (1) using a communication protocol S1, and
being linked with others linking and controlling stations (3) using a communication protocol X2,

wherein a plurality of said linking and controlling stations (3) are geographically gathered and tightly integrated, into one communication device (7).

## Description

The technical domain of the invention is the domain of communication system and particularly mobile communication infrastructure at the regional segment.

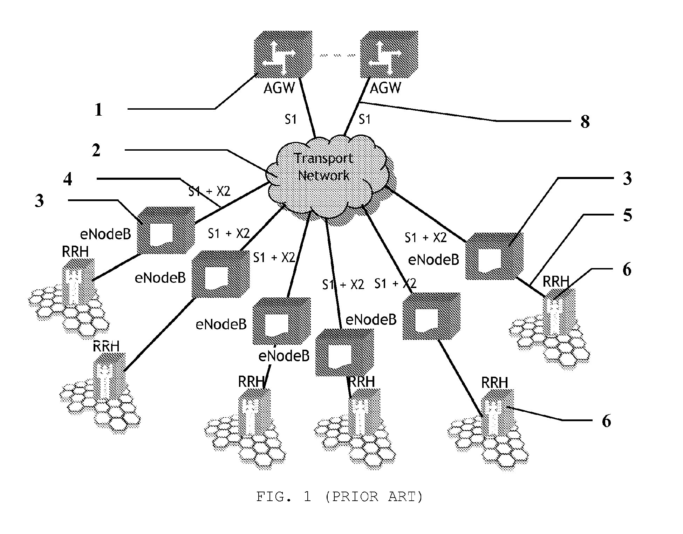

With reference to figure 1, a mobile communication infrastructure, as for example an LTE (3GPP Long Term Evolution) infrastructure, typically comprises an interconnecting core network at its "centre", and a plurality of remote radio heads (RRH) 6 at its "periphery" regularly spread over the territory intended to be covered by the mobile communication infrastructure. A regional segment of such a communication system comprises a plurality of access gateways (AGW) 1 interconnected each other by way of said core network. A remote radio head 6 is able to communicate with a user's mobile equipment such as phone, smartphone, personal digital assistant or the like. In order to establish a communication between two mobile equipments, each in communication with a respective remote radio head 6, the mobile communication infrastructure is able to provide communication between said two remote radio heads 6, at same time or not.

A typical prior art communication infrastructure is designed as a hierarchical tree where the core is the root, and where the remote radio heads 6 are the leaves. To each remote radio head 6 one linking and controlling station (eNodeB) 3 is associated. This linking and controlling station 3 is linked to at least one associated remote radio head 6, controls said associated remote radio head 6, is linked with at least one access gateway 1 using a communication protocol S1, and is linked with others linking and controlling stations 3 using a communication protocol X2. Said associated linking and controlling station 3 may either be located close to the remote radio head 6 itself or being remote, e.g. for ease of installation or maintenance. In any case a link 5 allows communication exchange between said linking and controlling station 3 and said associated remote radio head 6. As shown on figure 1, the linking and controlling stations 3 may be linked with each other through a transport network 2 supporting the X2 protocol by mean of links 4. The linking and controlling stations 3 may also be linked with access gateways 1 through the same transport network 2 also supporting the S1 protocol by mean of links 4 and links 8.

So doing, a communication between two mobile equipments in radio communication each with a remote radio head 6 may be established in different ways. If both mobile equipments are in communication with the same remote radio head 6, local communication, then the linking and controlling station 3 associated, directly controls the communication. If both mobile equipments are in communication with two different remote radio heads 6, but pertaining to the same regional segment, regional communication, or what is equivalent, which are associated with two linking and controlling stations 3 which are linked to the same regional transport network 2, then the communication is established controlled by the two linking and controlling stations 3 interconnecting through transport network 2 and links 4 using the X2 protocol. If one of the mobile equipment is in communication with a remote radio head 6 located inside of the regional segment while the other mobile equipment is in communication with a remote radio head 6 located outside of the regional segment, then the communication, national or international communication, is established through the core, the linking and controlling stations 3 interconnecting via the access gateways 1 through transport network 2, links 4 and links 8, using the S1 protocol. To synthesize, the communication is established at the lowest common level shared by the two remote radio heads 6 in the mobile communication infrastructure tree.

The major drawbacks of such architecture are revealed by the increasing needs of mobile communication systems such as e.g. the new generation long term evolution (LTE) systems.

First, the very high and ever increasing bit rates necessitate costly transport connections, and especially between linking and controlling stations 3, in order to support X2 interfaces.

Another drawback of the prior art is that, even for regional communications, which are the most frequent ones, an important traffic is induced between linking and controlling stations 3, thus leading to traffic congestion of transport network 2, due to the X2 protocol important traffic.

Another drawback of the prior art is that the previously described architecture mandates the dimensioning of the processing capacity of a linking and controlling station 3 to be able to sustain the high radio capacity of the associated remote radio head 6, so locally over dimensioning each linking and controlling station 3.

Another drawback of the prior art is that a mobility switch, when a mobile equipment switches from a first remote radio head 6 to a second one, and thus from a first linking and controlling station 3 to a second one, necessarily introduces additional delays, e.g. longer hang-over decision making or longer hang-over execution.

Another drawback of said architecture is that it also leads to an important complexity of resource management functions (RRM). This drawback may be illustrated by a possible lack of RRM Central Agent. The performances of said resource management functions are reduced because of the required knowledge of information resources about several linking and controlling stations 3.

The proposed solution advantageously offers a replacing architecture that remedies said drawbacks.

The object of the invention is a communication device, at regional segment of a mobile communication infrastructure, linking at least one access gateway, AGW, to a core of said mobile communication infrastructure and a plurality of at least one remote radio head, RRH, comprising one linking and controlling station, eNodeB, associated to each remote radio head, said linking and controlling station:
being linked with said associated remote radio head,
controlling said remote radio head,
being linked with the access gateways using a communication protocol S1, and
being linked with others linking and controlling stations using a communication protocol X2,
wherein a plurality of said linking and controlling stations are geographically grouped and tightly integrated, into one communication device.

According to another feature of the invention, said communication device is linked to access gateways by a first wavelength division multiplexing, WDM, network supporting S1 protocol. This first WDM network could be a Dense WDM network DWDM.

According to another feature of the invention, said communication device is linked to radio head stations by a second wavelength division multiplexing, WDM, network. This second WDM network could be a Coarse WDM network CWDM.

According to yet another feature of the invention, either said first wavelength division multiplexing network or said second wavelength division multiplexing network or both are supported by an optical medium.

According to yet another feature of the invention, the X2 interface is internal to said communication device.

Others features, details and advantages of the invention will become more apparent from the detailed illustrating description given hereafter with respect to the drawings on which, in addition to figure 1 already described with respect to prior art:
- figure 2 is a schematic view of a regional segment of a mobile communication infrastructure where a communication device according to the invention may take place,
- figure 3 is a schematic view of the inside organisation of a communication device according to a particular embodiment of the invention.

The main idea of the invention is to operationally gather multiple linking and controlling stations 3 of a regional segment into a unique communication device 7.

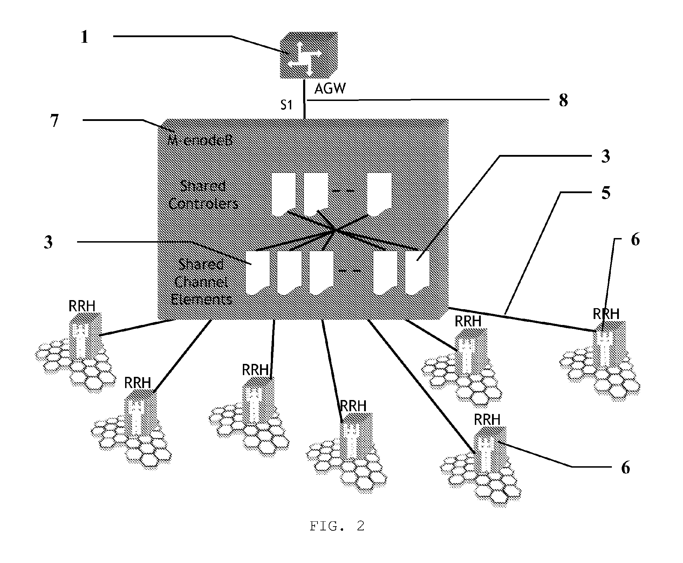

According to figure 2, the architecture depicted according to an embodiment of the invention, appears similar in many points to the architecture of the prior art. As in prior art, at regional segment, at least one access gateway, AGW, 1, offering access to a core of the mobile communication infrastructure, is linked to a plurality of at least one remote radio head, RRH, 6. Each remote radio head 6 is associated to a linking and controlling station 3. Said associated linking and controlling station 3 is in charge of controlling said remote radio head 6 and is linked with said associated remote radio head 6, is also linked with said at least one access gateways 1 using a communication protocol S1, and is also linked with others linking and controlling stations 3 using a communication protocol X2.

According to the invention, a set of linking and controlling stations 3, e.g. the ones controlling and associated with the radio remote heads 6 located in a same regional area, are geographically gathered and tightly integrated, into one communication device 7, also called a "multiple eNodeB" or M-eNodeB. Such an architecture groups several linking and controlling station 3 into a single communication device. The integration of linking and controlling stations 3 is not a simple stacking of the hardware of separated linking and controlling stations 3, but a true integration enabling the sharing of processing means, the sharing of dynamic resource information and the aggregation of transport within said communication device 7.

The sharing of processing means across multiple linking and controlling stations 3 allow for a reduction of the global number of processors required to support the mobile communication access application in a highly scalable manner. Such a reduction is provided statistically, since all the stations 3 are not statistically fully loaded at the same time.

Another advantage of the invention is that it provides a transport aggregation solution without any external station 3. This thus reduces the operational expenditure.

It also enables, due to the proximity of the stations 3, the implementation of high performance resource management through the real time sharing of information between the stations 3 managed by the communication device 7 (e.g. inter-cell interference coordination...).

The architecture according to the invention also provides high mobility performances for handover between radio remote heads 6 managed by a same communication device 7. This means shorter delays, e.g. faster hand-over decision making or shorter hand-over execution.

Another advantage is, when applied to multi technologies (stations 3 inside a communication device being of different technologies) to enable smooth transition between technologies, such as GSM BSC, CDMA BSC or WCDMA RNC migrating towards LTE. Such transition may be done with an important hardware re-use of existing worldwide already deployed stations 3.

Another important advantage is to promote the elimination of the transport network 2 congestion by significant aggregation of transport.

X2 interface between stations 3 would no longer suffer from the transport network congestion, since it is replaced by intra communication device connectivity.

Another advantage of the invention is to provide reduced delays, especially for intra communication device 7 communications.

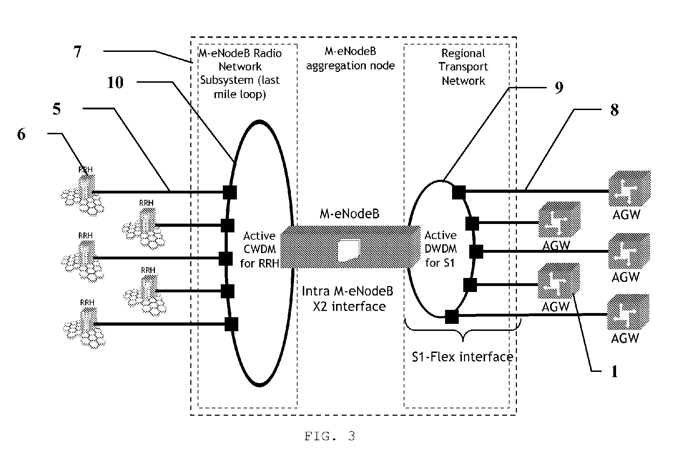

Now referring to figure 3, is presented a particular embodiment. According to a particular embodiment of the invention, said communication device 7 is advantageously linked to access gateways 1 by mean of a first wavelength division multiplexing, WDM, 9 network supporting S1 protocol.

According to another particular embodiment of the invention, said first wavelength division multiplexing 9 network may advantageously be supported by an optical medium.

According to another particular embodiment of the invention, said communication device 7 is advantageously linked to radio head stations 6 by mean of a second wavelength division multiplexing, WDM, 10 network.

According to another particular embodiment of the invention, said second wavelength division multiplexing 10 network may advantageously be supported by an optical medium.

One of the aforementioned advantages is conferred by the proximity of the gathered stations 3. Such an arrangement allows the X2 interface between said stations 3 to remain internal to said communication device 7 and to be short in length. This consequently allows the use of very performing communication means such as on-board communication means, e.g. backplane implementation of said X2 interface to accommodate the important throughput of the X2 interface and in the same time freeing the transport network 2 from said throughput.

## Claims

1. Communication device, at regional segment of a mobile communication infrastructure, linking at least one access gateway, AGW, (1) to a core of said mobile communication infrastructure and a plurality of at least one remote radio head, RRH, (6), comprising one linking and controlling station, eNodeB, (3), associated to each remote radio head (6), said linking and controlling station (3):
being linked with said associated remote radio head (6)
controlling said remote radio head (6),
being linked with the access gateways (1) using a communication protocol S1, and
being linked with others linking and controlling stations (3) using a communication protocol X2,
**characterised in that** a plurality of said linking and controlling stations (3) are geographically gathered and tightly integrated, into one communication device (7).

2. Communication device according to claim 1, wherein said communication device (7) is linked to access gateways (1) by a first wavelength division multiplexing, WDM (9) network supporting S1 protocol.

3. Communication device according to claim 2, wherein said first wavelength division multiplexing, WDM, (9) is a dense wavelength multiplexing, DWDM (9).

4. Communication device according to claim 2 or 3, wherein said first wavelength division multiplexing (9) network is supported by an optical medium.

5. Communication device according to any one of claims 1 to 4, wherein said communication device (7) is linked to radio head stations (6) by a second wavelength division multiplexing, WDM, (10) network.

6. Communication device according to claim 5, wherein said second wavelength division multiplexing, WDM, (10) is a coarse wavelength multiplexing, CWDM (10).

7. Communication device according to claim 5 or 6, wherein said second wavelength division multiplexing (10) network is supported by an optical medium.

8. Communication device according to any one of claims 1 to 7, wherein X2 interface is internal to said communication device (7).
